# EUROPEAN PATENT APPLICATION

(11) **EP 2 871 749 A1**
(43) Date of publication of application: **13.05.2015**
(21) Application number: 13290273.5
(22) Date of filing: 07.11.2013
(51) Int. Cl.: H02J 13/00, H04L 29/08, H04L 29/12

(54) **A method of managing the definition of at least one action in at least a portion of an electrical power grid**

(71) Applicant: ALCATEL LUCENT, 92100 Boulogne-Billancourt (FR)
(72) Inventor: Templ, Wolfgang, 74372 Sersheim (DE); Kopp, Dieter, 75428 Illingen (DE)
(74) Representative: Louis Pöhlau Lohrentz

(57) **Abstract**

The present invention defines and makes use of a conception of individual, preferably unique addresses of individual electrical devices (20) connected to particular connection devices of a network grid, such as sockets (20).

## Description

### Field of the Invention:

The present invention relates to a method of managing the definition of at least one action such as of an action relating to managing power consumption and/or provision, in at least a portion of an electrical power grid (or in a sub-grid of such electrical power grid).

For the action, in particular a first data processing device associated to a first sub-grid is responsible. The first data processing device is either located where the elements of the first sub-grid are, or distant therefrom. An action can in particular be made by the first data processing device sending a control information (i.e., a sequence of data bits), or by causing the emission of a physical (electrical) control signal.

### Background of the Invention:

The invention starts from the former conception of a so-called "smart-grid". In such conceptions, knowledge about the identities of any participating units (electrical energy sources and consumers, storage means and the like) is present. With such knowledge, a central control shall be enabled to better manage the power consumption and/or provision by the individual participating units. The knowledge ends at the level of a household, of an electrical charging station, of a photovoltaic supplier unit, and the like.

It is known to identify individual consumer devices such as connectors and cables by particular identifiers. This is, e.g. used in the field of electro cars, see in particular the current standardization activity on IEC 62196-2-X. This includes the use of RFID-identifiers in connectors and cables.

In February 2012, there could be found reports at least in the internet on the Japanese company SONY's activities to build a new kind of electrical socket, which includes an RFID element.

### Summary of the Invention:

It is an object of the present invention to show a way how to increase the efficiency of the hitherto known smart grid conceptions.

It is still a further object of the invention to show a way how to define actions in an electrical power grid in a more adequate manner, taking into account the properties of individual electrical devices connected to the grid. This shall in particular apply to actions provided in order to manage power consumption and/or provision, the organization of the grid itself, and the like.

It is still further an object of the invention to efficiently address actions in an electrical power grid in a more adequate manner, in particular by taking into account on the basis of which individual electrical device such action shall be defined, or to which individual electrical device it shall be addressed.

It is still further an object of the invention to reflect the real situation of the overall connection in the overall hierarchy of components defining an electrical power grid when defining or causing actions therein or related thereto.

It is still further an object of the invention to provide a means enabling to efficiently address actions in an electrical power grid in a more adequate manner, said means being compact and inexpensive.

The problem is solved in a first aspect by a method of managing the definition of at least one action in at least one portion of an electrical power grid by using at least one first data processing device associated to a first sub-grid; the first sub-grid includes at least one connection device for electrically connecting an electrical device external to the first sub-grid; of these connection devices, at least one includes a receiver for receiving address information sent by a unit in or at an electrical device connected thereto; the method includes the following steps:
- storing, in a memory, a respective first address information for at least a part of the at least one first connection devices (and preferably for each of said first connection devices, respectively). The purpose of the first address information is to identify the respective connection device. Usually, each first address information pertains to one individual connection device. Different address information pertains to different connection devices. The first address information is thus preferably unique.
- Receiving, by a receiver of a first of the connection devices, a second address information from a unit in or at an electrical device (such as a switch or an electrical apparatus) connected to the first connection device,
- forwarding by the receiver, the second address information to the first data processing device to which the first connection device is associated,
- receiving the forwarded second address information by the first data processing device, and identifying the first address information associated to the first connection device from which the receiver sent the second address information. The first address information might be identified by identifying the receiver itself and retrieving from a data-base in a memory associated to the first data processing device the first address information.
- Using both the first address information identified and the second address information received to form a combined address defining, for use by a data processing device associated to at least the first sub-grid, which electrical device is connected to which connection device.
- Applying a first predetermined criterion on the basis of the combined address in order to define an action.

The present invention introduces the conception of identifying individual electrical devices connected to connection devices and thus connected to a portion of the electrical power grid. It is thus possible to more precisely adapt the individual actions to the overall configuration of electrical devices connected in a portion of the electrical power grid, or even in the overall power grid.

Preferably, at least the first address information is unique such that the combination (e.g. by concatenating) of first and second address information, the combined address, is equally unique. The combined address may thus reflect the real situation of the overall connection in the overall hierarchy.

The first address information preferably defines the position of the connection device in the electrical power grid or portion thereof by indicating a plurality of hierarchical levels of the electrical power grid or of the portion thereof, whereto these the first sub-grid pertains. This is the best way to define the unique first address.

Preferably, the at least one action relates to at least one of the group comprised of control of and information on power consumption and/or provision (with e.g. the aim to optimize for minimum power consumption/best power efficiency), control of the structure of the at least one portion of the electrical power grid ("grid control"), information on electrical devices in or at the at least one portion of said electrical power grid ("grid device identification"), control of and information on the electrical load applied to at least one sub-grid of the electrical power grid (e.g. with the aim to obtain overload protection), control of and information on power quality in at least one sub-grid of the electrical power grid, control of and information on energy flow and distribution and in the electrical power grid, control of generation and/or renewal of loads, control of transformers (in respect to load, overload and lifetime), demand supply management, control of provision of an isolated portion in said electrical power grid ("islanding") and of virtual power stations, and generally of sub-grid management-optimization.

In a preferred embodiment of the present method, the action includes one of allowing energy consumption and/or provision by the electrical device connected to the connection device and of reducing or avoiding energy consumption and/or provision by the electrical device connected to the connection device. In other words, the energy management takes place on an individual level addressing individual electrical devices such as sub-grids or even individual electrical apparatuses.

The action can equally include forwarding by the first data processing device the combined address to a second data processing device associated to either the electrical power grid or a higher level sub-grid, higher level as been seen with regard to the first sub-grid, and equally higher level with regard to a third sub-grid. The second data processing device receives at least two combined addresses from (both) the first and third sub-grids and is applying a second predetermined criterion in order to define a further action by the electrical apparatuses indicated by providing the at least two combined addresses (namely indicated to be connected to a particular connection device). In that aspect, the present invention allows for both decentral actions and centralized actions covering a large portion of the overall power grid.

In a preferred embodiment, the first data processing device receives second address information from at least two receivers of different connection devices (to which two different first addresses are associated). The first predetermined criterion then includes using at least one predetermined priority associated to one of the first addresses, one of the second addresses and/or one of the combined addresses. In other words, it might be the address itself which defines the particular action taken. In the case that the priority is associated to one of the first addresses, one connection device (e.g. a particular socket) is preferred over another connection device. For example, in a household, the connection devices in the living room or the kitchen could be preferred over those in the basement. The priority might equally be associated to the second addresses such as to prefer particular electrical apparatuses over other ones. E.g. in winter, an electrical radiator might be of more importance than a radio. These two ideas might be combined when the priority is associated to one of the combined addresses.

There might be a priority (value) associated to an individual address, and no priority to other addresses. It might equally be that each address is associated to a particular priority.

Preferably, the electrical device is one of the group comprised of a transformer, a generator, a transport and distribution network, a further sub-grid, a grid element, a switching element, and an electrical apparatus, in particular an industrial or a home device.

The memory in which the respective first address information is stored can in principle be provided in relation to the first data processing device as such. Preferably, the memories are associated to the at least one receiver. In other words, it is the connection device itself, which stores its own first address.

The present invention preferably makes use of the RFID-technology known to detect which electrical device, in particular electrical apparatus is connected to a particular connection device. Preferably, the unit in the electrical device is thus provided by an RFID-chip. This chip might be an active or passive one.

The connection devices, which also could be called "terminal" are preferably or comprise preferably a socket each. A socket is a most common way how to provide electrical energy by a provider in an electrical power grid to an electrical apparatus.

In the second aspect the problem is solved by a data processing device associated with a sub-grid of an electrical power grid, said data processing device configured:
- to receive second information forwarded from a receiver associated to a first connection device, said second address information being defined to identify an electrical device connected to said connection device,
- to identify first address information associated to said first connection device, said identifying including either extracting the first address information from a message sent by said receiver or identifying the receiver and reading the first address information from a lookup-table, wherein in the lookup-table the first address information corresponds to said receiver,
- to form a combined address by using the first address information and the second address information,
- to apply a first predetermined criterion on the basis of said combined address to define an action.

Herein, preferably the action is including emitting of a signal or sending of data to another device.

### Brief Description of the Figures:

The present invention will be more completely understood by the following detailed description of embodiments of the present invention with reference to the figures.
- Fig. 1: illustrates the different hierarchy (levels) of an exemplary electrical power grid, and how an address associated to an electrical apparatus connected to a particular socket may accordingly be defined;
- Fig. 2: shows individual sockets as part of a hierarchical power grid, and serves to illustrate how these sockets interact with electrical apparatuses and data processing devices.

### Detailed description of the embodiments:

The highest hierarchical level in an electrical power grid indicated at 100 is the transmission grid 10. In the present conception, the transmission grid 10 receives an identity TG ID 001.

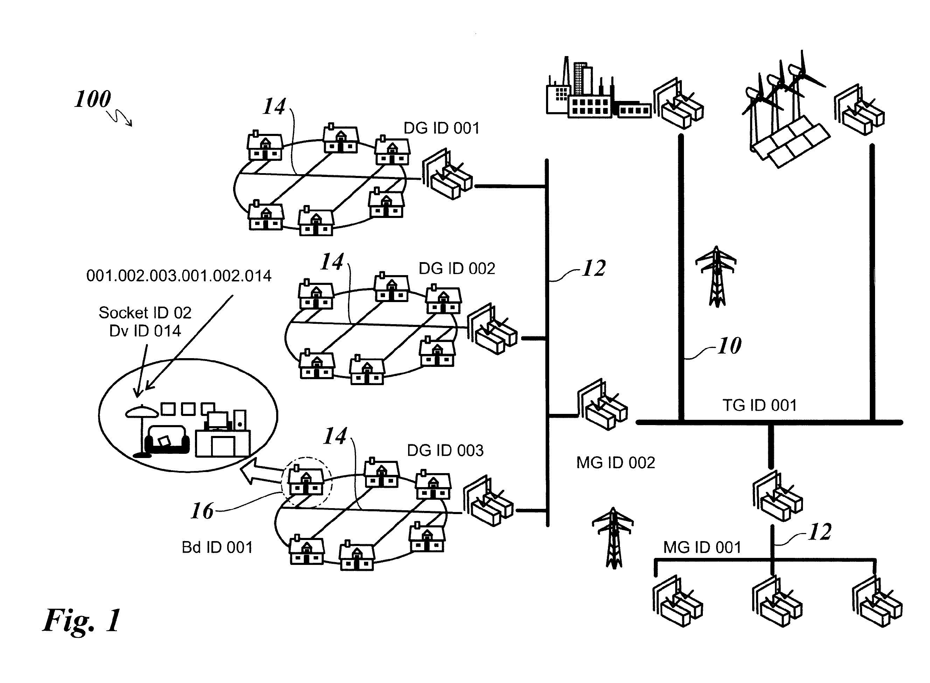

Energy is supplied to this transmission grid 10. The next-lower hierarchical level is that of medium voltage grids 12. Fig. 1 shows two such medium voltage grids. One of these has the identity MG ID 001, the other one has the identity MG ID 002. Presently, medium voltage grid with identity MG ID 002 is of interest.

This medium voltage grid 12 includes, as the next-lower hierarchical level, distribution grids. Fig. 1 shows three of these having identities DG ID 001, DG ID 002 and DG ID 003. Presently, distribution grid DG ID 003 is of interest.

In this distribution grid, particular buildings have each a building identity. One of the buildings 16 has building identity Bd ID 001. This building is presently of interest.

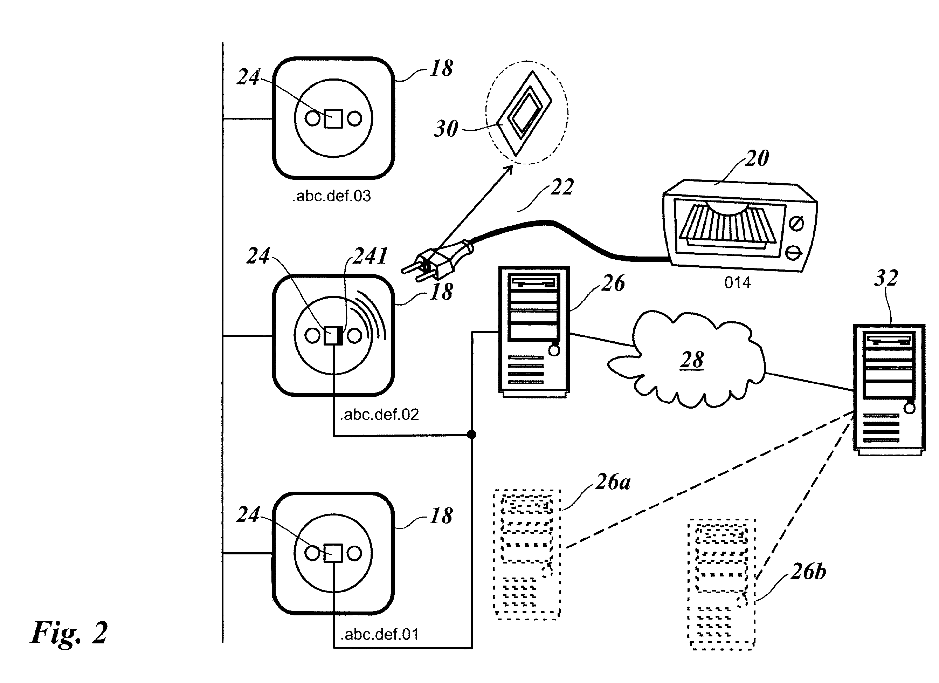

In the building 16, several sockets exist, see e.g. the three sockets 18 shown in fig. 2. One socket has the socket ID 02. Connected to this socket is an electrical apparatus having the device ID Dv ID 014.

Now, as shown in fig. 1, a combined address is formed by attaching the three numbers of the TG ID, the MG ID, the DG ID, the Bd ID, the socket ID and the Dv ID one after another. In the present example, we thus obtain the combined address "001.002.003.001.002.0014".

It has become clear by the present explanation, that each socket has a unique address defined by its position in view of the higher level sub-grids in the overall grid hierarchy.

It is explained hereinafter with regard to fig. 2 how the address information is obtained and what it is used for.

Into the socket having address 02 (in fig. 2: ".abc.def.02"), a plug 22 of an electrical device 20 (e.g. a micro-wave oven or the like) is inserted. The socket 18 is provided with an RFID reader. Socket 18 might detect insertion of the plug 22 as such and prompt the reader 24 to emit radio waves. The plug 22 is provided with an RFID chip 30 shown enlarged in fig. 2, which will receive the micro-waves and emit the identity associated to the electrical apparatus 20. This ID was presently the number "014".

The reader 24 thus acts as a receiver and receives the identity 014 from RFID-chip 30 at the electrical apparatus 20. As part of the socket 18, in this example, there is further a memory 241 provided, in which the position of the socket 18 in the grid hierarchy is stored. In the example of fig. 1, this would correspond to a first address "001.002.003.001.002."

Having now received the identity of electrical apparatus 20, "014," as a second address, the reader/receiver 24 forwards both its own address (first address indicated above) and the received second address to a server 26 responsible for a plurality of different sockets 18 each. The server 26 might be located close to the sockets 18 (e.g. in the same building), or be distant from the same, e.g. coupled via a data network ("cloud"). This server 26 combines the first address stemming from receiver 24 and the second address "014" to obtain combined address "001.002.003.001.002.014" as in the example of fig. 1. The server 26 is then able to define a particular action, e.g. on the basis of performing a particular algorithm, which corresponds to applying a first predetermined criterion. For example, the server 26 might identify the socket in the kitchen of a particular household (building 16 having building ID Bd ID 001) and learn from the combined address that a micro-wave oven has been connected thereto. Since cooking of food might be regarded as of high priority, the server may allow for energy consumption by the micro-wave oven, even if at the time of demand, the energy which might be provided in the overall power grid 100 or in sub-grids 12, 14, 16 thereof, is low.

At the same time, server 26 might receive from a further socket (not shown) first and second address information, wherefrom the algorithm determines that an electric generator is connected which may provide energy via the socket 18. Server 26 may then allow for provision of electrical energy by the generator to increase the overall available electrical energy, or at least the energy available in the corresponding sub-grid.

Server 26 might equally receive first and second address information from a socket 18 placed as an outer wall of the building and indicating the connection of a lawn mower. The lawn mover might have a low priority such that the server 26 will, by applying the first predetermined criterion, avoid that the lawn mower receives energy for its operation.

Fig. 2 equally shows a higher hierarchical level: Server 26 as a data processing device is connected via the world wide web (internet), or another data network 28 to a higher level server (higher level data processing device) 32. That server 32 of higher level might include that further servers 26a, 26b are arranged on a level lower or are at least associated to a sub-grid which is one level lower than a sub-grid to which higher level server 32 is associated.

Server 26 might forward a combined address to the server 32, which receives several combined addresses from all of the servers 26, 26a, 26b. By performing a particular algorithm (corresponding to applying of the second predetermined criterion), server 32 can provide managing tasks in order to define consumption and/or provision or supply of electrical energy in the associated sub-grids, in particular on the level of an individual socket 18 whereto an electrical apparatus 20 is connected.

Instead of storing the first address information relating to the socket 18 in memory 241 at socket 18, server 26 might equally be provided with such memory and be able to identify from which reader/receiver 24 second address information is forwarded. Such identifying might be based on identifying on which port of server 26 particular data are incoming. The invention is not limited to such particular techniques.

The overall conceptions explained herein above make use of a combined address including a unique address of a socket 18 (or, possibly, another kind of terminal or connection device), and an individual second address information associated to and stored in or at an electrical apparatus 20 which is connected to said socket 18. The inventive method makes use of this combined address information when applying a predetermined criterion which defines energy consumption and/or provision in the grid.

What has been, in the present example, discussed with regard to an electrical apparatus 20 connected to a socket 18 can more generally be applied to any kind of connection device to which an electrical device is connected. In particular, a connection device can be at a higher hierarchical level than socket 18, and the electrical device connected thereto can provide a lower hierarchical level of the electrical power grid 100.

For example, already when connecting a medium voltage grid 12 to transmission grid 10, the combined address can be defined by combining an individual first address of the transmission grid 10 TG ID 001 with an address of the medium voltage grid connected thereto (e.g. MG ID 002). In that case, the connection device might be a terminal to which a switch of the medium voltage grid can be connected.

Equally, the connection device might be provided as a medium voltage grid 12 and have as individual first address information attributed the information of the hierarchical level of transmission grid 10 and medium voltage grid 12, "001.002". The distribution grid DG ID 003 can be regarded as an electrical device connected to the connection device of medium voltage grid 12 and provide for individual second address information ("003"). The combined address information will then be "001.002.003".

Still further, the entirety of transmission grid 10, second medium voltage grid with identity MG ID 002 and third distribution grid having identity DG ID 003 can have a connection device at the level of the distribution grid DG ID 003. This connection device will then be attributed the individual first address information "001.002.003". If thereto the electrical sub-grid of building 16 is connected having building identity Bd ID 001, this will provide the second address information ("001 "), and together one will obtain the combined address "001.002.003.001 ".

Similarly, when defining where a particular socket 18 such as that having the socket ID 02, one will form the combined address from the first address "001.002.003.001" and the second address "002".

Hence, the present method applies to all hierarchical levels of an electrical power grid 100. In particular, the combined address need not yet be complete, but can be completed later-on when connecting further sub-grids (or generally electrical devices) to the connection devices.

Of course, it is also possible to connect a sub-grid to which already a further sub-grid is connected. For instance, if formerly, the building having identity Bd ID 001 had been connected to another distribution grid than DG ID 003, and if the connection illustrated in fig. 1 was provided by connecting building Bd ID 001 to distribution grid DG ID 003, the first address would be "001.002.003", and the second address would be "001.002.0014" in order to define the hierarchical level of the electrical apparatus 20.

The functions of the various elements shown in the figures, including any functionable blocks described to be "servers", may be provided with a use of dedicated hardware as well as hardware capable of executing software and associated with appropriate software. The server, representing a data processing device per se, might include a processor, or the function of such processor may be provided by a single dedicated processor, by a single shared processor, or by a plurality of individual processors, some of which may be shared. Furthermore, the use of a digital signal processor (DSP) hardware, network processor, application specific integrated circuit (ASIC), field programmable gate array (FPGA), read only memory (ROM) for storing software, random access memory (RAM) and non-volatile storage is possible. Other hardware, conventional and/or custom, may also be included.

## Claims

1. A method of managing the definition of at least one action in at least one portion of an an electrical power grid (10) by using at least one first data processing device (26) associated to a first sub-grid (16) with said first sub-grid (16) including at least one connection device (18) for electrically connecting an electrical device (20) external to said first sub-grid (16), at least one of said connection devices (18) including a receiver (24) for receiving address information sent by a unit (30) in or at an electrical device (20) connected to said at least one of said connection devices (18),
said method including the following steps:
- storing, in a memory (241), a respective first address information for at least a part of said at least one first connection devices (18) for the purpose of identifying the respective connection device (18),
- receiving, by a receiver (24) of a first of said connection devices (18), a second address information from a unit (30) in or at an electrical device (20) connected to said first connection device (18),
- forwarding, by said receiver (24), the second address information to the first data processing device (26) to which said first connection device (18) is associated,
- receiving the forwarded second address information by said first data processing device (26), and identifying the first address information associated to the first connection device (18) from which the receiver (24) sent said second address information,
- using both the first address information identified and the second address information received to form a combined address defining, for use by a data processing device (26, 32) associated to at least said first sub-grid (16), which electrical device (20) is connected to which connection device (18),
- applying a first predetermined criterion on the basis of said combined address in order to define an action.

2. The method according to claim 1,
wherein said first address information defines the position of said connection device (18) in said at least one portion of said electrical power grid by indicating a plurality of hierarchical levels of said at least one portion of said electrical power grid, wherein to these hierarchical levels said first sub-grid (16) pertains.

3. The method according to claim 1 or 2,
wherein said at least one action relates to at least one of the group comprised of control of and information on power consumption and/or provision, control of the structure of said at least one portion of said electrical power grid, information on electrical devices in or at at least one portion of said electrical power grid, control of and information on the electrical load applied to at least one sub-grid of said electrical power grid, control of and information on power quality at at least one sub-grid of said electrical power grid, control of and information on energy flow and distribution in said electrical power grid, control of and information on generation and/or renewal of loads, control of transformers, demand supply management, control of provision of isolated portions and said electrical power grid and of virtual power sections.

4. The method according to any one of the preceeding claims,
wherein the action includes one of allowing of energy consumption and/or provision by said electrical device (20) connected to the connection device (18) and of reducing or avoiding energy consumption and/or provision by said electrical device (20) connected to the connection device (18).

5. The method according to any of the preceding claims,
wherein the action includes forwarding by said first data processing device (26) said combined address to a second data processing device (32) associated to either the electrical power grid (10) or a higher level sub-grid (12, 14) with regard to both of said first sub-grid (16) and a third sub-grid (16), wherein said second data processing device (32) receives at least two combined addresses from the first and third sub-grids (16) and is applying a second predetermined criterion in order to define a further action.

6. The method according to any one of the preceding claims,
wherein said electrical device is one of the group comprised of a transformer, a generator, a transport or distribution network, a further sub-grid, a grid element, a switching element, and an electrical apparatus (20), in particular in an industrial or a home device (20).

7. The method according to any one of its preceding claims,
**characterized in that** said first data processing device (26) receives second address information from at least two receivers (24) of different connection devices (18), and wherein said first predetermined criterion includes using at least one predetermined priority associated to one of the first addresses, one of the second addresses and/or one of the combined addresses.

8. The method according to any one of the preceding claims,
**characterized in that** said memory (241) is associated to said at least one receiver (24).

9. The method according to any one of the preceding claims,
**characterized in that** said unit in said electrical apparatus (20) is an RFID chip.

10. The method according to any one of the preceding claims,
**characterized in that** at least part of said connection devices (18) are or comprise a socket each.

11. A data processing device (26) associated to a sub-grid (16) of an electrical power grid (10), said data processing device (26) configured:
- to receive second address information forwarded from a receiver (24) associated to a first connection device (18), said second address information being defined to identify an electrical device (20) connected to said connection device (18),
- to identify first address information associated to said first connection device (18), said identifying including either extracting the first address information from a message sent by said receiver (24), or identifying the receiver (40) and reading the first address information from a lookup-table, wherein in the lookup-table it corresponds to said receiver (24),
- to form a combined address by using the first address information and the second address information,
- to apply a first predetermined criterion on the basis of said combined address to define an action, said action preferably including emitting a signal or sending data to another device.

## Amended claims

### Amended claims in accordance with Rule 137(2) EPC.

1. A method of defining of at least one action in at least one portion of an an electrical power grid (10) by using at least one first data processing device (26) associated to a first sub-grid (16) with said first sub-grid (16) including at least one connection device (18) for electrically connecting an electrical device (20) external to said first sub-grid (16), at least one of said connection devices (18) including a receiver (24) for receiving address information sent by a unit (30) in or at an electrical device (20) connected to said at least one of said connection devices (18),
said method including the following steps:
- storing, in a memory (241), a respective first address information for at least a part of said at least one first connection devices (18) for the purpose of identifying the respective connection device (18),
- receiving, by a receiver (24) of a first of said connection devices (18), a second address information from a unit (30) in or at an electrical device (20) connected to said first connection device (18),
- forwarding, by said receiver (24), the second address information to the first data processing device (26) to which said first connection device (18) is associated,
- receiving the forwarded second address information by said first data processing device (26), and identifying the first address information associated to the first connection device (18) from which the receiver (24) sent said second address information,
- using both the first address information identified and the second address information received to form a combined address defining, for use by a data processing device (26, 32) associated to at least said first sub-grid (16), which electrical device (20) is connected to which connection device (18),
- applying a first predetermined criterion on the basis of said combined address in order to define an action.

2. The method according to claim 1,
wherein said first address information defines the position of said connection device (18) in said at least one portion of said electrical power grid by indicating a plurality of hierarchical levels of said at least one portion of said electrical power grid, wherein to these hierarchical levels said first sub-grid (16) pertains.

3. The method according to claim 1 or 2,
wherein said at least one action relates to at least one of the group comprised of control of and information on power consumption and/or provision, control of the structure of said at least one portion of said electrical power grid, information on electrical devices in or at at least one portion of said electrical power grid, control of and information on the electrical load applied to at least one sub-grid of said electrical power grid, control of and information on power quality at at least one sub-grid of said electrical power grid, control of and information on energy flow and distribution in said electrical power grid, control of and information on generation and/or renewal of loads, control of transformers, demand supply management, control of provision of isolated portions and said electrical power grid and of virtual power sections.

4. The method according to any one of the preceeding claims,
wherein the action includes one of allowing of energy consumption and/or provision by said electrical device (20) connected to the connection device (18) and of reducing or avoiding energy consumption and/or provision by said electrical device (20) connected to the connection device (18).

5. The method according to any of the preceding claims,
wherein the action includes forwarding by said first data processing device (26) said combined address to a second data processing device (32) associated to either the electrical power grid (10) or a higher level sub-grid (12, 14) with regard to both of said first sub-grid (16) and a third sub-grid (16), wherein said second data processing device (32) receives at least two combined addresses from the first and third sub-grids (16) and is applying a second predetermined criterion in order to define a further action.

6. The method according to any one of the preceding claims,
wherein said electrical device is one of the group comprised of a transformer, a generator, a transport or distribution network, a further sub-grid, a grid element, a switching element, and an electrical apparatus (20), in particular in an industrial or a home device (20).

7. The method according to any one of its preceding claims,
**characterized in that** said first data processing device (26) receives second address information from at least two receivers (24) of different connection devices (18), and wherein said first predetermined criterion includes using at least one predetermined priority associated to one of the first addresses, one of the second addresses and/or one of the combined addresses.

8. The method according to any one of the preceding claims,
**characterized in that** said memory (241) is associated to said at least one receiver (24).

9. The method according to any one of the preceding claims,
**characterized in that** said unit in said electrical apparatus (20) is an RFID chip.

10. The method according to any one of the preceding claims,
**characterized in that** at least part of said connection devices (18) are or comprise a socket each.

11. A data processing device (26) associated to a sub-grid (16) of an electrical power grid (10), said data processing device (26) configured:
- to receive second address information forwarded from a receiver (24) associated to a first connection device (18), said second address information being defined to identify an electrical device (20) connected to said connection device (18),
- to identify first address information associated to said first connection device (18), said identifying including either extracting the first address information from a message sent by said receiver (24), or identifying the receiver (40) and reading the first address information from a lookup-table, wherein in the lookup-table it corresponds to said receiver (24),
- to form a combined address by using the first address information and the second address information,
- to apply a first predetermined criterion on the basis of said combined address to define an action, said action preferably including emitting a signal or sending data to another device.
